# FASCICULE DE BREVET EUROPEEN

(11) **EP 1 093 636 B1**
(45) Date de publication et mention de la délivrance du brevet: **27.11.2002**
(21) Numéro de dépôt: 99929426.7
(22) Date de dépôt: 07.07.1999
(51) Int. Cl.: G06K 19/07

(54) **INTERFACE ANALOGIQUE POUR CIRCUIT D'ECHANGE D'INFORMATIONS AUTONOME**
ANALOGE SCHNITTSTELLE FÜR EINE SELBSTÄNDIGE SCHALTUNGSANORDNUNG ZUM DATENAUSTAUSCH
ANALOG INTERFACE FOR AUTONOMOUS DATA EXCHANGE CIRCUIT

(30) Priorité: 08.07.1998 FR 9808750
(43) Date de publication de la demande: 25.04.2001
(73) Titulaire: COMMISSARIAT A L'ENERGIE ATOMIQUE, 75015 Paris (FR)
(72) Inventeur: BILLIOT, Gérard, F-38240 Meylan (FR)
(74) Mandataire: Weber, Etienne Nicolas
(86) Numéro de dépôt international: FR9901641
(87) Numéro de publication internationale: WO00003351

(56) Documents cités:
- EP-A- 0 764 920
- US-A- 5 698 838
- ALLEN P. E., HOLBERG D. R.: "CMOS Analog Circuit Design" 1 janvier 1996 (1996-01-01) , HOLT, RINEHART AND WINSTON INC. , NEWYORK XP002098191 8090 page 327; figure 7.2.1 page 334; figure 7.3.2

## Description

### Domaine technique

La présente invention concerne une interface analogique pour un circuit d'échange d'informations autonome.

Les circuits d'échange d'informations autonomes peuvent équiper des objets, tels que, par exemple, des objets traités sur une chaîne de production, ou des cartes portatives de stockage de données. L'échange des informations entre le circuit d'échange d'informations autonome et une station fixe a lieu, sans contact, par voie inductive.

Le circuit d'échange d'informations de même que l'objet qu'il équipe, sont généralement dépourvus d'une source d'alimentation électrique propre. L'énergie nécessaire à leur fonctionnement est fournie par voie inductive depuis la station fixe.

L'interface analogique de l'invention a par conséquent un double rôle d'émission/réception de données et d'alimentation électrique du circuit qui en est équipé.

L'invention trouve des applications notamment dans l'identification et le triage d'objets devant être fabriqués, traités ou stockés, et dans des équipements portatifs de type « carte à puce ».

L'invention peut ainsi être mise à profit dans les domaines du transport, du suivi de production ou pour l'identification d'animaux, par exemple.

### Etat de la technique antérieure

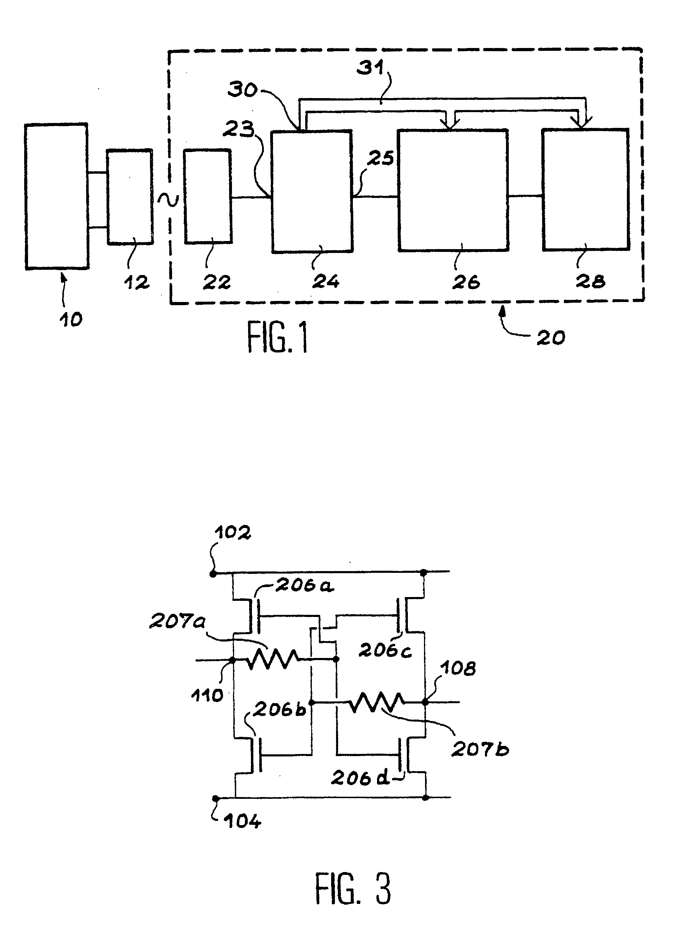

La figure 1 annexée représente sous la forme de blocs fonctionnels les principaux éléments d'un circuit d'échange d'informations, équipant un objet portable et associé à une station fixe.

La station fixe, repérée avec la référence générale 10, est pourvue d'une antenne 12 capable de recevoir un signal d'un circuit d'échange d'informations équipant un objet mobile, et capable de transmettre un signal à un tel circuit.

L'échange des informations a lieu par modulation d'une onde porteuse.

La référence générale 20 indique un circuit d'échange d'informations équipant un objet mobile non représenté. Ce circuit est également pourvu d'une antenne 22 pour l'émission et la réception d'une onde porteuse éventuellement modulée par le circuit d'échange 20 (en mode d'émission) ou par la station fixe 10 (en mode de réception).

Une interface analogique 24 du circuit 20 présente une entrée/sortie 23 reliée à l'antenne 22 et une première entrée/sortie 25 permettant l'échange de signaux de données avec une unité logique de traitement 26, telle qu'une unité à microprocesseur. L'unité logique est associée à des moyens de mémoire 28 dans lesquels sont stockées des données à échanger.

Une deuxième sortie 30 de l'interface analogique délivre, comme le montre une flèche 31, une énergie d'alimentation électrique à l'unité logique 26 et à la mémoire 28. Cette énergie est délivrée à partir de l'énergie inductive reçue par l'antenne 22.

Le document (1) dont la référence est précisée à la fin de la présente description décrit une interface analogique pour un circuit d'échange d'informations adapté à une modulation en réception de type "tout ou rien". L'interface comporte deux unités de redressement et de régulation destinées à extraire du signal présent aux bornes d'une antenne, des données d'informations et l'énergie d'alimentation nécessaire au circuit.

Une telle interface présente un fonctionnement correct dans une plage donnée d'amplitude du signal reçu. Lorsque le signal reçu est faible, le circuit d'échange d'informations devient cependant inopérant par défaut d'une alimentation électrique suffisante.

A l'inverse, lorsque le champ appliqué à l'antenne est très fort, les unités de redressement et de régulation sont traversées par des courants intenses. Ainsi, pour éviter une destruction de ces unités sous l'effet des surintensités, il est nécessaire de dimensionner largement leurs composants constitutifs. Cet impératif s'avère cependant peu compatible avec la miniaturisation du circuit d'échange d'informations.

Le document (2) dont la référence est également indiquée à la fin de la description, décrit une interface analogique pour un circuit d'échange d'informations par modulation de phase d'une onde porteuse.

Le dispositif décrit est équipé de moyens d'ajustage du niveau du signal reçu et permet d'éviter les difficultés liées à des surtensions ou des surintensités dans les composants de l'interface.

Le fonctionnement d'un tel dispositif s'avère satisfaisant lorsque la fréquence de l'onde porteuse du signal (modulée en phase) présente une fréquence faible, inférieure au MHz. Pour une utilisation avec une fréquence de l'onde porteuse supérieure à 10 MHz, la solution proposée par le document (2) conduit, notamment pour la démodulation, à une consommation électrique rédhibitoire, peu compatible avec le caractère autonome des circuits d'échange d'informations.

Enfin, le document (3) décrit un système de transmission de données à modulation d'amplitude, pourvu d'un redresseur destiné à fournir une tension d'alimentation.

### Exposé de l'invention

La présente invention a pour but de proposer une interface analogique pour un circuit d'échange d'informations ne présentant pas les limitations des dispositifs évoqués précédemment.

Un but est en particulier de proposer une telle interface pour un circuit d'échange d'informations par modulation d'amplitude d'une onde porteuse.

Un autre but est de proposer une telle interface adaptée à fonctionner dans une gamme de fréquence élevée avec des ondes porteuses dont la fréquence est supérieure à 10 MHz.

Un but est également de proposer une interface présentent une très faible consommation en énergie et susceptible d'être fortement intégrée sous la forme d'une puce.

Un but est encore de proposer une telle interface réalisée avec un nombre réduit de composants et adaptée à une fabrication industrielle en grande série.

Un but est enfin de proposer une interface susceptible de fonctionner correctement en dépit de fortes variations de l'intensité du champ inductif reçu par l'antenne du circuit d'échange d'informations.

Pour atteindre ces buts, l'invention a plus précisément pour objet une interface analogique pour un circuit d'échange d'informations par modulation d'amplitude d'une onde porteuse, comprenant une entrée d'interface destinée à être connectée aux bornes d'une antenne, un démodulateur, dont une sortie est connectée à une unité logique du circuit d'échange d'informations, et des moyens de fourniture d'une tension d'alimentation au circuit d'échange d'informations.

Conformément à l'invention, l'interface comporte en outre des moyens de redressement et de filtrage de l'onde porteuse, reliés d'une part à une entrée du démodulateur, et d'autre part à un dispositif de régulation de ladite tension d'alimentation.

Grâce aux caractéristiques exposées ci-dessus, et notamment au dispositif de régulation, le circuit peut être protégé contre les surintensités et les surtensions. Les composants de l'interface et de l'unité logique ne sont traversés que par un courant minimal nécessaire à leur fonctionnement et peuvent être dimensionnés de façon très réduite. De plus, les moyens de redressement et de filtrage sont utilisés en commun pour le traitement du signal destiné au démodulateur et pour la régulation de l'alimentation. Des gains de place, de coût, d'énergie de fonctionnement, et de prix de fabrication peuvent ainsi être obtenus.

De plus, l'interface est susceptible de fonctionner pour des fréquences d'onde porteuse supérieure à 10 MHz. Les moyens de redressement et de filtrage, disposés juste après l'antenne permettent de fournir au démodulateur, et donc au circuit logique, un signal de faible fréquence. Un traitement du signal est alors possible sans entraîner une consommation d'énergie excessive.

Le dispositif de régulation peut comporter des moyens de modification de l'impédance de l'antenne en fonction d'une tension redressée délivrée par les moyens de redressement et de filtrage.

Ces moyens de modification d'impédance permettent de rendre l'antenne plus ou moins réceptive au champ inductif reçu et affranchissent par conséquent le circuit de variations de courant ou de tension susceptibles d'être provoquées par des variations de l'intensité du champ inductif.

Selon une forme de réalisation particulière des moyens de modification de l'impédance de l'antenne, ceux-ci peuvent comporter une charge commandable, connectée à l'entrée de l'interface, en parallèle aux bornes de l'antenne.

La charge commandable peut être réalisée par exemple à partir d'un transistor à effet de champ dont les bornes de canal (source et drain) sont respectivement connectées aux bornes de l'antenne par l'intermédiaire de résistances.

Le dispositif de régulation de la tension d'alimentation peut comporter en outre :
- une source de tension de référence, et
- des moyens de comparaison de la tension redressée délivrée par les moyens de redressement et de filtrage, avec la tension de référence. Les moyens de comparaison sont reliés à une entrée de commande des moyens de modification de l'impédance de l'antenne pour piloter les moyens de modification de l'impédance, en fonction d'une différence de tension entre la tension redressée et la tension de référence.

Les moyens de redressement et de filtrage peuvent être reliés au démodulateur également par. l'intermédiaire des moyens de comparaison, et/ou peuvent y être connectés par une liaison électrique directe.

Les moyens de comparaison comportent, par exemple, un amplificateur avec une entrée positive reliée au redresseur, une entrée négative reliée à la source de tension de référence et une sortie de commande reliée aux moyens de modification de l'impédance.

L'amplificateur des moyens de comparaison peut être un amplificateur opérationnel dont les entrées non-inverseuse et inverseuse forment respectivement les entrées positive et négative.

Les moyens de comparaison peuvent également être construits autour d'un transistor à effet de champ, en particulier de type PMOS, avec une grille formant l'entrée négative, une première borne de canal formant l'entrée positive et une deuxième borne de canal formant la sortie.

D'autres caractéristiques et avantages de la présente invention ressortiront mieux de la description qui va suivre, en référence aux figures des dessins annexés. Cette description est donnée à titre purement illustratif et non limitatif.

### Brève description des figures

- La figure 1, déjà décrite, est une illustration sous forme de diagramme à blocs fonctionnels, des principaux organes d'un circuit d'échange d'informations auquel l'interface de l'invention peut être appliquée.
- La figure 2 est une représentation schématique simplifiée illustrant un mode de réalisation de l'interface de l'invention.
- La figure 3 est une représentation schématique d'une réalisation particulière de moyens de redressement en vue de la fourniture d'une tension d'alimentation, de l'interface de l'invention.
- La figure 4 est une représentation schématique d'une réalisation particulière de moyens contrôlables de modification d'impédance d'antenne pouvant équiper l'interface de l'invention.
- La figure 5 est une représentation schématique d'une réalisation particulière et avantageuse d'un amplificateur comparateur pouvant équiper l'interface de l'invention.
- La figure 6 est une représentation schématique d'une réalisation particulière d'un générateur de signal d'horloge pouvant équiper l'interface de l'invention.
- La figure 7 est une représentation schématique d'une réalisation particulière d'un modulateur pouvant équiper l'interface de l'invention.

### Description détaillée de modes de mise en oeuvre de l'invention

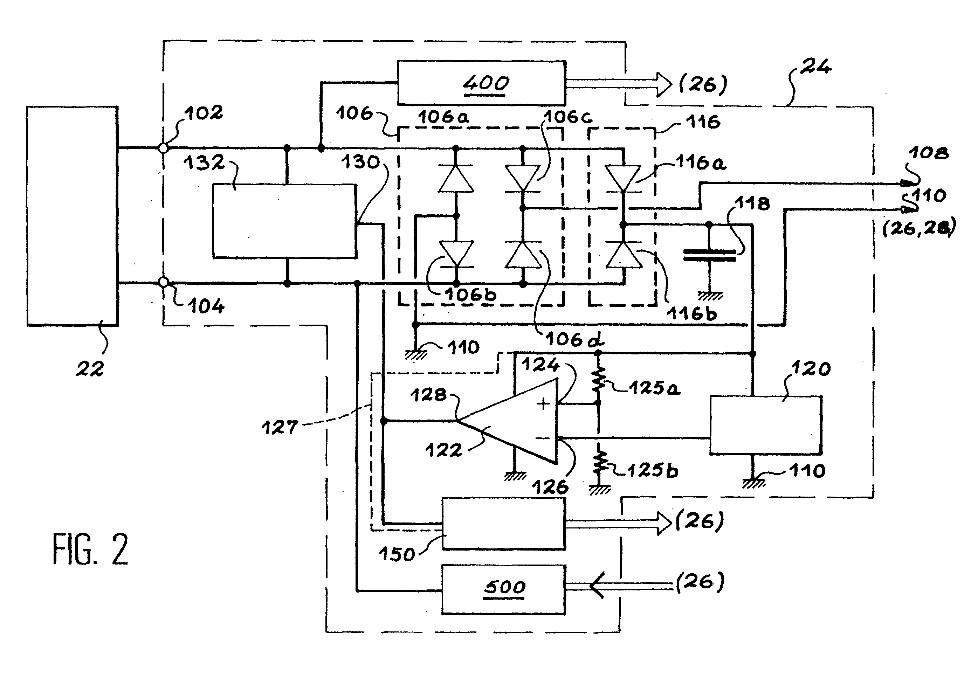

Par analogie avec la figure 1 déjà décrite, la référence générale 24 de la figure 2 désigne l'interface d'un circuit d'échange d'informations. Ce circuit comporte en outre une antenne d'émission réception, une unité logique de traitement et une unité de mémoire.

Toujours par analogie avec la figure 1, l'antenne, l'unité logique et la mémoire portent respectivement les références 22, 26 et 28. L'unité logique et la mémoire ne sont pas représentées sur la figure 2 mais sont simplement signifiées par leur référence entre parenthèses.

L'entrée 23 de l'interface 24 est constituée par deux bornes 102 et 104, reliées aux bornes de l'antenne 22.

Un premier redresseur 106, schématisé par exemple sous la forme d'un pont de quatre diodes 106a, 106b, 106c, 106d est connecté aux bornes d'entrée d'antenne 102, 104. Tout autre dispositif de redressement peut être utilisé.

Aux bornes de sortie 108, 110 du premier redresseur 106 est prélevée une tension d'alimentation délivrée aux différents organes du circuit d'échange d'informations et en particulier à l'unité logique 26 et à la mémoire 28.

Une première borne de sortie 108 est formée par les cathodes de deux diodes 106c, 106d du redresseur 106, dont les anodes sont connectées aux bornes d'entrée 102, 104. La deuxième borne de sortie 110 est formée par les anodes de deux diodes 106a, 106b dont les cathodes sont connectées aux bornes d'entrée. La deuxième borne de sortie 110 constitue, dans l'exemple décrit, une borne de masse, référence négative de l'interface 24.

Un deuxième redresseur 116 comporte deux diodes 116a, 116b dont les anodes sont respectivement reliées aux bornes d'entrée 102 et 104 de l'interface. La sortie du deuxième redresseur 116 est constituée par les cathodes des diodes 116a et 116b qui sont reliées en commun à une première armature d'un condensateur de filtrage 118.

Selon une variante, les diodes 106a, 106b, 106c, 116a et 116b peuvent être remplacées également par des transistors à effet de champ, utilisés comme jonction, dont le canal est relié à l'une des bornes de canal (drain ou source). De plus, des résistances extérieures de liaison peuvent équiper les bornes de grille, de canal et de source de ces transistors.

La seconde armature du condensateur de filtrage est reliée à la borne de masse 110.

Aux bornes du condensateur de filtrage 118 est disponible une tension redressée et filtrée dont la valeur est proportionnelle à la tension fournie par l'antenne, c'est-à-dire proportionnelle à l'intensité du champ inductif vu par l'antenne. Cette tension est simplement désignée ci-après par "tension redressée".

La tension redressée sert à l'alimentation d'une source de tension de référence 120. La source de tension de référence permet de délivrer une tension de sortie constante, prédéterminée et indépendante de la tension d'alimentation dans une large gamme de fonctionnement.

La tension redressée est utilisée également pour alimenter en énergie un amplificateur 122, du type amplificateur opérationnel, par exemple.

La tension redressée est enfin appliquée à une première entrée 124 (non inverseuse) de l'amplificateur 122, par l'intermédiaire d'un pont de résistances 125a, 125b. La deuxième entrée 126 (inverseuse) de l'amplificateur 122 reçoit la tension de référence délivrée par la source de tension de référence 120. L'amplificateur 122 forme pour l'essentiel un moyen de comparaison de la tension redressée et filtrée et de la tension de référence.

Un signal délivré par la sortie 128 de l'amplificateur 122, est sensiblement proportionnel à la différence entre la tension redressée et la tension de référence. Ce signal est désigné ci-après par "sortie de commande". Il est appliqué à une borne de commande 130 d'une charge commandable 132.

La charge commandable 132 est connectée en parallèle sur les bornes d'entrée 102, 104, c'est-à-dire en parallèle sur les bornes de l'antenne. Elle permet de modifier l'impédance de l'antenne pour l'adapter à l'intensité du champ inductif reçu depuis une station fixe communiquant avec le circuit d'échange d'informations.

Lorsque le champ inductif vu par l'antenne tend à augmenter, la tension disponible aux bornes 102, 104 de l'antenne 22 augmente aussi. De ce fait, la tension de sortie disponible aux bornes de sortie 108, 110, de même que la tension redressée disponible aux bornes du condensateur 118, tendent également à augmenter. L'amplificateur délivre alors une tension de commande, qui appliquée à la charge commandable 132, tend à réduire son impédance et, par conséquent, l'impédance de l'ensemble formé par l'antenne 22 et la charge commandable. Cette impédance est simplement appelée "impédance de l'antenne".

L'antenne est donc moins "sensible" et la tension de sortie est régulée.

A l'inverse une diminution du champ inductif vu par l'antenne provoque un ajustage de la charge commandable de nature à augmenter l'impédance et la sensibilité de l'antenne 22, par l'intermédiaire de la sortie de commande.

Selon ce principe la modulation d'amplitude de faible valeur émise par la station fixe est présente sur la sortie de commande.

Grâce à la régulation de l'impédance de l'antenne, et donc du courant et des tensions délivrées par les premier et deuxième redresseurs 106, 116, les différents composants de l'interface, et du reste du circuit d'échange d'informations, sont à l'abri de surtensions et de surcourants susceptibles de se produire lors de variations importantes du champ inductif reçu. De plus, du fait que la régulation est directement faite sur l'antenne, la capacité et la taille des composants peuvent ainsi être réduites et l'intégration des composants est facilitée.

La sortie de commande, qui contient le signal d'informations initialement modulé sur l'onde porteuse est également appliquée à une première entrée d'un démodulateur 150, dont la sortie est reliée à l'unité logique 26. Le démodulateur délivre, à l'unité logique un signal, de préférence numérique, correspondant à l'information du signal initialement codé sur l'onde porteuse. Le fonctionnement d'un démodulateur est en soi connu et n'est pas détaillée ici.

De façon à étendre la plage de fonctionnement du démodulateur au-delà d'une plage de fonctionnement des composants permettant d'établir la sortie de commande, il est possible de connecter directement la tension redressée et filtrée disponible aux bornes du condensateur 118 à une deuxième entrée du démodulateur 150. Cette possibilité est représentée sur la figure par une ligne en trait discontinu 127.

Les références 400 et 500 sur la figure 2 désignent respectivement un générateur de signal d'horloge et un modulateur pouvant équiper l'interface. Ces dispositifs sont détaillés dans la suite de la description.

Le dispositif de redressement 106, 116 de la figure 2, construit autour de diodes à jonction, peut également, à titre de variante, être réalisé autour de transistors à effet de champ. Une telle réalisation est illustrée à la figure 3.

Un premier et un deuxième transistors à effet de champ 206a, 206b présentent des canaux en série entre les bornes d'entrée 102, 104 de l'interface. De la même façon, un troisième et un quatrième transistors. à effet de champ sont également en série entre les bornes d'entrée. La grille du premier transistor 206a est reliée à la grille du quatrième transistor 206d et reliée par une résistance 207a à un noeud 110 commun entre les premier et deuxième transistors. La grille du deuxième transistor 206b est reliée à la grille du troisième transistor 206c et par une résistance 207b à un noeud 108 entre les troisième et quatrième transistors. Les noeuds 108 et 110 constituent les bornes de sortie du premier redresseur. Entre ces bornes est disponible une tension continue d'alimentation pour le circuit d'échange d'informations.

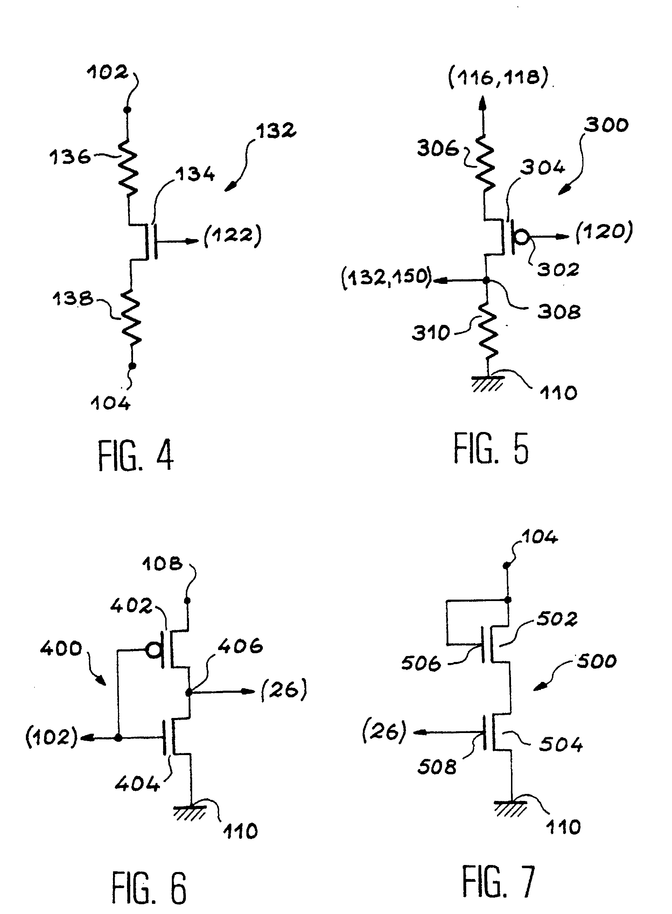

La figure 4 montre une réalisation possible de la charge commandable connectée aux bornes d'entrée 102, 104, c'est-à-dire en parallèle aux bornes de l'antenne.

La charge commandable comporte un transistor à effet de champ 134, de type NMOS, dont la grille constitue une borne de commande reliée à l'amplificateur 122 décrit en référence à la figure 2. Le canal du transistor 134 est relié respectivement aux bornes d'entrée 102 et 104 par des résistances 136, 138 dont les valeurs sont de préférence égales et adaptées à l'impédance souhaitée de l'antenne. Ces résistances apportent une protection supplémentaire au transistor 134 : elles font chuter les tensions de drain et source lorsqu'un fort courant circule dans le transistor.

Dans une version simplifiée, les résistances peuvent être omises et remplacées simplement par une liaison conductrice.

La figure 5, montre une possibilité de réalisation de moyens de comparaison de la tension redressée et filtrée avec la tension de référence, constituant une variante du dispositif de la figure 2, qui ne fait pas appel à un amplificateur opérationnel.

Le dispositif de comparaison de la figure 5 comprend un transistor à effet de champ 300, de type PMOS, dont la grille 302 est connectée à la sortie de la source de tension de référence 120, non représentée.

La source 304 du transistor 300 reçoit la tension redressée provenant du deuxième redresseur 116 et du condensateur 118, non représentés, par l'intermédiaire d'une résistance de source 306.

Le drain 308 du transistor 300 est relié à la charge commandable 132, non représentée, et au démodulateur 150, non représenté. Le drain est également relié à la borne de masse 110 par une résistance 310. Ce dispositif a un gain limité et fonctionne en boucle ouverte, ce qui permet d'avoir des performances en fréquence intéressantes, pour une consommation faible.

La figure 6 illustre la réalisation d'un générateur de signal d'horloge 400 pouvant équiper le circuit d'échange d'informations. Le générateur d'horloge comporte pour l'essentiel un inverseur logique réalisé à partir de deux transistors 402, 404 à effet de champ, respectivement de type PMOS et NMOS, en série entre les bornes d'alimentation 108, 110 (bornes de sortie du premier redresseur non représenté).

Les grilles des transistors 402 et 404 sont connectées en commun à l'une des bornes d'entrée 102, c'est-à-dire à l'une des bornes de l'antenne. La sortie du générateur d'horloge se fait par un noeud 406, entre les transistors 402, 404. Ce noeud est relié à l'unité logique 26, non représentée, du circuit d'échange d'informations.

La figure 7 représente une réalisation particulière d'un modulateur 500 pouvant équiper l'interface afin de moduler l'onde porteuse émise par l'antenne vers la station fixe, en fonction de signaux émis par l'unité logique de traitement.

Le modulateur comporte un premier et un deuxième transistor à effet de champ 502, 504, de type NMOS, connectés en série et dans cet ordre entre l'une des bornes d'entrée 104 de l'interface, c'est-à-dire l'une des bornes de l'antenne, et la borne de masse 110. La grille 506 du premier transistor 502 est également reliée à la borne d'entrée 104 de l'interface. la grille 508 du deuxième transistor 504 est connectée à l'unité logique de traitement 26, non représentée, qui y applique les signaux de modulation à émettre.

On observe que le modulateur est de type dissymétrique au sens où il n'est connecté qu'à l'une des bornes de l'antenne. Cette spécificité permet d'effectuer une modulation de la charge tout en minimisant l'impact de la modulation sur le dispositif de régulation de la tension d'alimentation.

Une réalisation de l'interface avec un modulateur symétrique, connecté aux deux bornes de l'antenne, reste toutefois envisageable.

De façon privilégiée, le générateur de signal d'horloge 400 et le modulateur 500 sont connectés sur des broches différentes de l'antenne afin de réduire les influences du générateur de signal d'horloge 400 sur le modulateur 500. Il est néanmoins possible d'utiliser la même broche de connexion sans nuire au fonctionnement.

La réalisation d'une interface telle que décrite ci-dessus fait appel à un très faible nombre de composants et est susceptible d'une forte intégration. Un gain de place important est également obtenu, comme décrit ci-dessus, par la mise en commun d'un certain nombre d'organes, tels que le deuxième redresseur, le condensateur de filtrage 118 et l'amplificateur 122, à la fois pour le dispositif régulateur de tension et pour l'attaque du démodulateur.

### DOCUMENT CITES

***(1)***
   WO 96/38805
***(2)***
   EP-A-0 706 151
***(3)***
   EP-A-0 764 920.

## Revendications

1. Interface analogique (24) pour un circuit d'échangé d'informations par modulation d'amplitude d'une onde porteuse, comprenant une entrée d'interface (102, 104) destinée à être connectée aux bornes d'une antenne (22), un démodulateur (150), dont une sortie est connectée à une unité logique (26) du circuit d'échange d'informations, et des moyens (106) de fourniture d'une tension d'alimentation au circuit d'échange d'informations, **caractérisé en ce qu'**elle comporte en outre des moyens de redressement et de filtrage (116, 118) de l'onde porteuse, reliés à une entrée du démodulateur (150) et à un dispositif (120, 122, 132) de régulation de ladite tension d'alimentation, pour leur fournir une tension redressée.

2. Interface selon la revendication 1, dans laquelle le dispositif de régulation comporte des moyens (132) de modification de l'impédance de l'antenne (22) en fonction d'une tension redressée délivrée par les moyens de redressement et de filtrage (116, 118).

3. Interface selon la revendication 2, dans laquelle les moyens (132) de modification de l'impédance de l'antenne comportent une charge commandable connectée à l'entrée d'interface (102, 104), en parallèle aux bornes de l'antenne (22).

4. Interface selon la revendication 3, dans laquelle la charge commandable comporte un transistor à effet de champ (134) dont les bornes de canal (source et drain) sont respectivement connectées aux bornes de l'antenne par l'intermédiaire de résistances (136, 138).

5. Interface selon la revendication 4, dans laquelle les résistances (136, 138) présentent des valeurs sensiblement identiques.

6. Interface selon la revendication 2, dans laquelle le dispositif de régulation comporte :
- une source de tension de référence (120), et
- des moyens de comparaison d'une tension redressée délivrée par les moyens de redressement et de filtrage (116, 118) avec la tension de référence, les moyens de comparaison étant reliés à une entrée de commande (130) des moyens (132) de modification de l'impédance de l'antenne pour piloter les moyens de modification de l'impédance, en fonction d'une différence de tension entre la tension redressée et la tension de référence.

7. Interface selon la revendication 6, dans laquelle les moyens de comparaison comportent un amplificateur (122) avec une entrée positive (124) reliée au redresseur, une entrée négative (126) reliée à la source de tension de référence (120) et une sortie de commande (128) reliée aux moyens (132) de modification de l'impédance.

8. Interface selon la revendication 7, les moyens de redressement et de filtrage sont reliés au démodulateur par l'intermédiaire des moyens de comparaison, la sortie (128) de l'amplificateur étant connectée à l'entrée du démodulateur (150).

9. Interface selon la revendication 7, dans laquelle l'amplificateur (122) est un amplificateur opérationnel dont les entrées non-inverseuse et inverseuse forment respectivement les entrées positive et négative.

10. Interface selon la revendication 1, dans laquelle le démodulateur présente une entrée connectée directement aux moyens de redressement et de filtrage.

11. Interface selon la revendication 6, dans laquelle les moyens de comparaison comportent un transistor (300) à effet de champ, en particulier de type PMOS, avec une grille (302) formant l'entrée négative, une première borne de canal (304) formant l'entrée positive et une deuxième borne de canal (308) formant la sortie.

12. Interface selon la revendication 1, comprenant en outre un générateur (400) de signal d'horloge avec une entrée reliée à une des bornes (102) de l'anten (22) et une sortie reliée à l'unité logique (26).

13. Interface selon la revendication 1, comprenant en outre un modulateur (500) avec une entrée reliée à l'unité logique (26) et une sortie reliée à l'une des bornes (104) de l'antenne.

14. Interface selon la revendication 1, pour laquelle l'onde porteuse présente une fréquence supérieure à 10 mégahertz.

15. Circuit d'échange d'informations comprenant une interface selon l'une quelconque des revendications précédentes.

## Patentansprüche

1. Analoge Schnittstelle (24) für eine Schaltung zum Datenaustausch durch Amplitudenmodulation einer Trägerwelle, mit einem Schnittstelleneingang (102, 104), dazu bestimmt, mit den Anschlüssen einer Antenne (22) verbunden zu werden, einem Demodulator (150), dessen einer Ausgang mit einer logischen Einheit (26) der genannten Datenaustausch-Schaltung verbunden ist, und Einrichtungen (106) zum Liefern einer Versorgungsspannung an die Datenaustausch-Schaltung,
**dadurch gekennzeichnet,**
**dass** sie außerdem Gleichrichtungs- and Filterungseinrichtungen (116, 118) der Trägerwelle umfasst, verbunden mit einem Eingang des Demodulators (150) und mit einer Vorrichtung (120, 122, 132) zur Regelung der genannten Versorgungsspannung, um ihnen eine gleichgerichtete Spannung zu liefern.

2. Schnittstelle nach Anspruch 1, bei der die Regelungsvorrichtung Einrichtungen (132) zur Modifizierung der Impedanz der Antenne (22) in Abhängigkeit von einer durch die Gleichrichtungs- und Filterungseinrichtungen gelieferten gleichgerichteten Spannung umfasst.

3. Schnittstelle nach Anspruch 2, bei der die Einrichtungen (132) zur Modifizierung der Antennenimpedanz eine steuerbare Last umfassen, verbunden mit dem Schnittstelleneingang (102, 104), parallel zu den Anschlüssen der Antenne (22).

4. Schnittstelle nach Anspruch 3, bei der die steuerbare Last einen Feldeffekt-Transistor (134) umfasst, dessen Kanalanschlüsse (Source und Drain) jeweils über Widerstände (136, 138) mit den Anschlüssen der Antenne verbunden sind.

5. Schnittstelle nach Anspruch 4, bei der die Widerstände (136, 138) im Wesentlichen identische Werte haben.

6. Schnittstelle nach Anspruch 2, bei der die Regelungsvorrichtung umfasst:
- eine Bezugsspannungsquelle (120), und
- Einrichtungen zum Vergleichen einer gleichgerichteten Spannung, geliefert durch die Gleichrichtungs- und Filterungseinrichtungen (116, 118), mit der Bezugsspannung, wobei die Vergleichseinrichtungen mit einem Steuereingang (130) der Einrichtungen (132) zur Modifizierung der Antennenimpedanz verbunden sind, um die Einrichtungen zur Modifizierung der Impedanz in Abhängigkeit von einer Spannungsdifferenz zwischen der gleichgerichteten Spannung und der Bezugsspannung steuern zu können.

7. Schnittstelle nach Arispruch 6, bei der die Vergleichseinrichtungen einen Verstärker (122) umfassen, mit einem positiven Eingang (124), verbunden mit dem Gleichrichter, einem negativen Eingang (126), verbunden mit der Bezugsspannungsquelle (120), und einem Steuereingang (128), verbunden mit den Einrichtungen (132) zur Modifikation der Impedanz.

8. Schnittstelle nach Anspruch 7, wobei Gleichrichtungs- und Filterungseinrichtungen mit dem Demodulator durch Vergleichseinrichtungen verbunden sind und der Ausgang (128) des Verstärkers mit dem Eingang des Demodulators (150) verbunden ist.

9. Schnittstelle nach Anspruch 7, bei der der Verstärker (122) ein Operationsverstärker ist, dessen nicht-invertierter und dessen invertierter Eingang jeweils den positiven und den negativen Eingang bilden.

10. Schnittstelle nach Anspruch 1, bei der der Demodulator einen Eingang aufweist, der direkt mit den Gleichrichtungs- und Filterungseinrichtungen verbunden ist.

11. Schnittstelle nach Anspruch 6, bei der die Vergleichseinrichtungen einen Feldeffekt-Transistor (300) umfassen, insbesondere des Typs PMOS, mit einem den negativen Eingang bildenden Gate (302), einem den positiven Eingang bildenden ersten Kanalanschluss (304) und einem den Ausgang bildenden zweiten Kanalanschluss (308).

12. Schnittstelle nach Anspruch 1 mit außerdem einem Taktsignalgenerator (400), mit einem Eingang mit einem der Anschlüsse (102) der Antenne (22) verbunden, und mit einem Ausgang mit der logischen Einheit (26) verbunden.

13. Schnittstelle nach Anspruch 1 mit außerdem einem Modulator (500), mit einem Eingang mit der logischen Einheit (26) verbunden, und mit einem Ausgang mit einem der Anschlüsse (104) der Antenne verbunden.

14. Schnittstelle nach Anspruch 1, bei der die Trägerwelle eine Frequenz von über 10 MHz hat.

15. Datenaustausch-Schaltung mit einer Schnittstelie nach einem der vorangehenden Ansprüche.

## Claims

1. Analogue interface (24) for an information exchange circuit by amplitude modulation of a carrier wave, comprising an interface input (102, 104) intended to be connected to the terminals of an antenna (22), a demodulator (150), one output of which is connected to a logical unit (26) in the information exchange circuit, and means (106) of supplying a power supply voltage to the information exchange circuit, **characterised in that** it also comprises means of rectifying and filtering (116, 118) the carrier wave, connected to one input of the demodulator (150) and a device (120, 122, 132) for regulating the said power supply voltage in order to supply a rectified voltage thereto.

2. Interface according to claim 1, in which the regulation device comprises means (132) of modifying the impedance of the antenna (22) as a function of a rectified voltage supplied by the rectificating and filtering means (116, 118).

3. Interface according to claim 2, in which the means (132) of modifying the impedance of the antenna comprise a controllable load connected to the interface input (102, 104) in parallel to the terminals of the antenna (22).

4. Interface according to claim 3, in which the controllable load comprises a field effect transistor (134) in which the channel terminals (source and drain) are respectively connected to the antenna terminals through resistances (136, 138).

5. Interface according to claim 4, in which the values of the resistances (136, 138) are approximately identical.

6. Interface according to claim 2, in which the regulation device comprises:
- a reference voltage source (120), and
- means of comparing the rectified voltage output by the rectification and filter means (116, 118), with the reference voltage, the comparison means being connected to a control input (130) applied to means (132) of modifying the antenna impedance to control the impedance modification means as a function of a difference in voltage between the rectified voltage and the reference voltage.

7. Interface according to claim 6, in which the comparison means comprise an amplifier (122) with a positive input (124) connected to the rectifier, a negative input (126) connected to the reference voltage (120) source and a control output (128) connected to the impedance modification means (132).

8. Interface according to claim 7, in which the rectification and filter means are connected- to the demodulator through comparator means, the amplifier output (128) being connected to the demodulator input (150).

9. Interface according to claim 7, in which the amplifier (122) may be an operational amplifier in which the non-inverting and inverting inputs form the positive and negative inputs respectively.

10. Interface according to claim 1, in which the demodulator has an input directly connected to the rectification and filter means.

11. Interface according to claim 6, in which the comparison means comprise a field effect transistor (300), particularly a PMOS type transistor, with a grid (302) forming the negative input, a first channel terminal (304) forming the positive input and a second channel terminal (308) forming the output.

12. Interface according to claim 1, also comprising a clock signal generator (400) with an input connected to one of the terminals (102) of the antenna (22) and one output connected to the logical unit (26).

13. Interface according to claim 1, also comprising a modulator (500) with one input connected to the logical unit (26) and one output connected to one of the antenna terminals (104).

14. Interface according to claim 1, for which the frequency of the carrier wave is greater than 10 Megahertz.

15. Information exchange circuit comprising an interface according to any one of the previous claims.
